# EUROPEAN PATENT SPECIFICATION

(11) **EP 2 337 108 B1**
(45) Date of publication and mention of the grant of the patent: **23.10.2013**
(21) Application number: 10192981.8
(22) Date of filing: 29.11.2010
(51) Int. Cl.: H01M 10/42, H01M 2/20, H01M 2/22, H01M 2/10, H01M 2/04

(54) **Secondary battery**
Sekundärbatterie
Batterie secondaire

(30) Priority: 27.11.2009 KR 20090115967
(43) Date of publication of application: 22.06.2011
(73) Proprietor: Samsung SDI Co., Ltd., Yongin-si, Gyeonggi-do (KR)
(72) Inventor: Moon, Daeyon, Yongin-si, Gyeonggi-do (KR)
(74) Representative: Santarelli

(56) References cited:
- EP-A1- 1 077 497
- US-A1- 2003 215 702
- US-A1- 2006 159 987
- US-A1- 2008 063 932

## Description

### BACKGROUND

### 1. Field

An embodiment of the present invention relates to a secondary battery.

### 2. Description of the Related Art

Recently, as electronic industries, communication industries and computer industries are rapidly developing, portable electronic appliances are becoming widely used. Rechargeable secondary batteries are typically used as power sources of these portable electronic appliances.

In general, a secondary battery includes an electrode assembly that includes a positive electrode, a negative electrode and a separator disposed between the positive electrode and the negative electrode. The electrode assembly is stored and protected in a protective member.

In this case, the secondary battery includes electrode tabs extending from the positive electrode and the negative electrode to connect the positive electrode and the negative electrode to an external device.

A lead line is required to connect the exposed electrode tabs to an external device such as a protective circuit module that controls the secondary battery. In this case, the electrode tabs are connected to the lead line by electric resistance welding.

US 2003/215702, US 2006/159987 and EP 1 077 497 disclose an electrical connection between a battery tab and a lead line made by welding. US 2008/063932 discloses an electrical connection made by welding between a battery terminal and a lead line consisting of two layers.

Improvements in the welding characteristics between the electrode tabs and the lead line may lead to a reduction in the internal resistance of the secondary battery.

### SUMMARY

An aspect of an embodiment of the present invention is directed toward a secondary battery in which the welding characteristics of a lead line welded to electrode tabs can be improved.

According to the present invention, a secondary battery includes a bare cell including an exposed electrode tab and a lead line welded to the electrode tab and configured to electrically connect the bare cell to a device electrically connected to the lead line. The lead line includes a welding region and a lead region excluding the welding region. The lead line is welded to the electrode tab in the welding region. The welding region includes a first layer and a second layer. The second layer has a higher electrical conductivity than that of the first layer. The first layer is welded to the electrode tab. The lead line comprises an insulating film formed thereon and configured to expose some region of the first layer for dividing the leadline into the welding region which is not covered with the insulating film and the lead region which is covered with insulating film.

The lead line may be electric resistance welded to the electrode tab.

The electrode tab may be formed of nickel or a nickel based alloy, the first layer may be formed of nickel or a nickel based alloy and the second layer may be formed of copper or a copper based alloy.

The first layer may have an thickness substantially identical to that of the second layer.

The second layer may have a plate shape and be in contact with a surface of the first layer.

The second layer may include a coating on a surface of the first layer.

The second layer may include a plated layer on a surface of the first layer.

The first and second layers may be provided in a clad form.

The second layer may have a larger area than that of the welding region.

### BRIEF DESCRIPTION OF THE DRAWINGS

The accompanying drawings, together with the specification, illustrate exemplary embodiments of the present invention, and, together with the description, serve to explain the principles of the present invention.

FIGS, 1 and 2 are perspective views illustrating a secondary battery according to an embodiment.

FIGS. 3A and 3B are schematic views illustrating a portion where a plurality of electrode tabs and a lead line of a secondary battery are welded according to an embodiment.

FIG. 4 is a perspective view illustrating a secondary battery according to another embodiment.

### DETAILED DESCRIPTION

In the following detailed description, only certain exemplary embodiments of the present invention are shown and described, by way of illustration. As those skilled in the art would recognize, the invention may be embodied in many different forms and should not be construed as being limited to the embodiments set forth herein. Like reference numerals designate like elements throughout the specification.

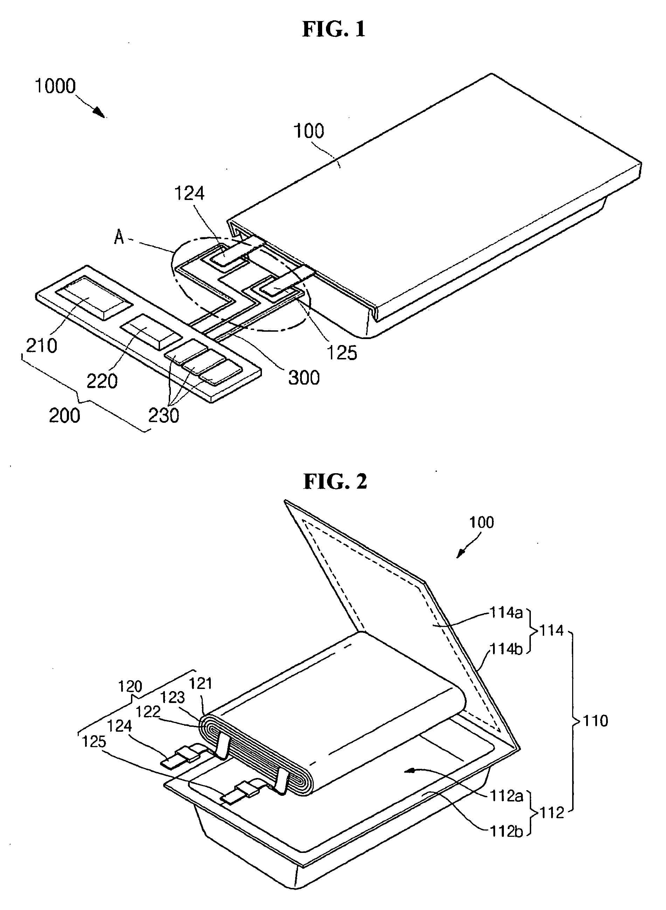

FIG. 1 is a perspective view illustrating a secondary battery according to an embodiment. FIG. 2 is a perspective view illustrating a part of the secondary battery of FIG. 1.

Referring to FIGS. 1 and 2, a secondary battery 1000 includes a bare cell 100, a protective circuit board 200 electrically connected to the bare cell 100 and a lead line 300 electrically connecting the bare cell 100 to the protective circuit board 200.

As illustrated in FIG. 2, the bare cell 100 includes a protective member 110 and an electrode assembly 120 stored within the protective member 110.

The protective member 110 includes a main body 112 and a cover 114.

The main body 112 includes a receiving part 112a that is a space for receiving the electrode assembly 120 and a sealing part 112b that extends away from an opening of the receiving part 112a.

The cover 114 extends from an edge of the sealing part 112b of the main body 112. The cover 114 entirely covers the receiving part 112a of the main body 112 and also forms a seal with the sealing part 112b of the main body 112. Thus, the cover 114 includes a receiving part cover region 114a corresponding to the receiving part 112a of the main body 112 and a sealing part 114b corresponding to the sealing part 112b of the main body 112.

Thus, the secondary battery 1000 is formed by storing the electrode assembly 120 in the receiving part 112a of the main body 112, by covering the receiving part 112a with the cover 114 and by sealing the sealing part 112b of the main body 112 with the sealing part 114b of the cover 114 using a suitable method. An example of a suitable method for forming a seal between the sealing part 112b of the main body 112 and the sealing part 114b of the cover 114 is heat welding, but is not limited thereto.

When the electrode assembly 120 is stored in the receiving part 112a, or while being stored in the receiving part 112a, an electrolyte is injected into the receiving part 112a so that the electrode assembly 120 is immersed in the electrolyte. After the electrode assembly 120 is stored and the protective member 110 is sealed, a first electrode tab 124 and a second electrode tab 125 that extend from electrode plates of the electrode assembly 120 are exposed out of the protective member 110.

The electrode assembly 120 includes a first electrode plate 121, a second electrode plate 122 and a separator 123.

Since the separator 123 is disposed between the first electrode plate 121 and the second electrode plate 122, the electrode assembly 120 has a structure in which the first electrode plate 121 is insulated from the second electrode plate 122.

The electrode assembly 120 may be a jelly roll type electrode assembly in which the first electrode plate 121, the separator 123 and the second electrode plate 122 are first stacked on top of one another, then wound in a jelly roll shape as illustrated in FIG. 2. In another embodiment, the electrode assembly 120 may alternatively be a stack type electrode assembly in which the first electrode plate 121, the separator 123 and the second electrode plate 122 are repeatedly stacked.

The electrode assembly 120 includes the first electrode tab 124 connected to the first electrode plate 121 and the second electrode tab 125 connected to the second electrode plate 122. The first electrode tab 124 and the second electrode tab 125 are exposed out of the protective member 110.

In one embodiment, the first electrode plate 121 of the electrode assembly 120 is a positive electrode plate, and the second electrode plate 122 is a negative electrode plate. In another embodiment, the first electrode plate 121 is a negative electrode plate, and the second electrode plate 122 is a positive electrode plate.

When the first electrode plate 121 is a positive electrode plate and the second electrode plate 122 is a negative electrode plate, the first electrode tab 124 is a positive electrode tab for connecting a positive electrode, and the second electrode tab 125 is a negative electrode tab for connecting a negative electrode.

The bare cell 100 is electrically connected to a device such as the protective circuit board 200 (also referred to as a protective circuit module 200) for charging and discharging or for controlling the electrode assembly 120 stored in the bare cell 100. In the current embodiment, a device to which the bare cell 100 is electrically connected is the protective circuit module 200 for convenience of description, but the present invention is not limited thereto.

The protective circuit module 200 may control the charge and discharge of the electrode assembly 120 and the operation of the bare cell 100. The protective circuit module 200 includes a control device 210. Such a device may include an integrated circuit (IC) device, a secondary protective device 220 for preventing or protecting from an overcurrent from flowing to the secondary battery 1000 and/or external terminals 230 connecting the secondary battery 1000 to an external device.

In one embodiment of the secondary battery 1000, the first electrode tab 124 and the second electrode tab 125, both exposed out of the bare cell 100, are connected to the protective circuit module 200.

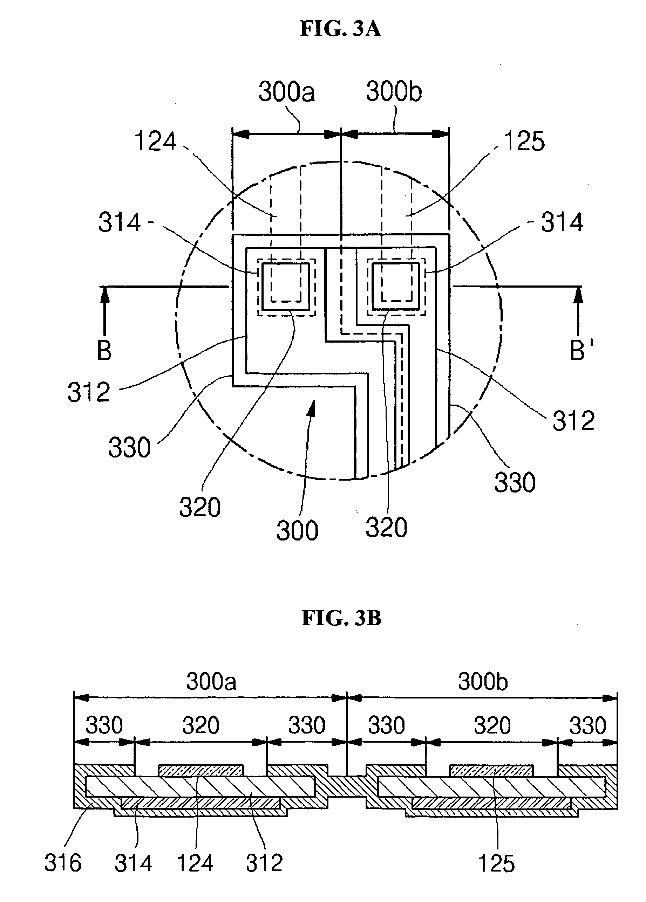

In this case, a member connecting both the first electrode tab 124 and the second electrode tab 125 to the protective circuit module 200 is the lead line 300. A first end of the lead line 300 is connected to both the first electrode tab 124 and the second electrode tab 125 of the bare cell 100. A second end of the lead line 300 is connected to the protective circuit module 200. Hereinafter, the first end of the lead line 300 connected to both the first electrode tab 124 and the second electrode tab 125 is as illustrated in FIGS. 3A and 3B. A description thereof will be made with reference to FIGS. 3A and 3B.

FIGS. 3A and 3B are schematic views illustrating a portion where the first electrode tab 124, the second electrode tab 125 and a lead line 300 of a secondary battery are welded, according to an embodiment. Specifically, FIG. 3A is an enlarged view illustrating a region A of FIG. 1. FIG. 3A illustrates a detailed structure in which the first electrode tab 124, the second electrode tab 125 and the lead line 300 of the secondary battery 1000 described with reference to FIGS. 1 and 2 are welded. FIG. 3B is a cross-sectional view taken along a line B-B' of FIG. 3A.

Referring to FIGS. 3A and 3B, both the first electrode tab 124 and the second electrode tab 125 exposed out of the bare cell 100 are connected to the protective circuit module 200 through the lead line 300 as described above.

A first end of the lead line 300 is connected to both the first electrode tab 124 and the second electrode tab 125. A second end of the lead line 300 is connected to a surface of the protective circuit module 200.

In FIGS. 3A and 3B, the first end of the lead line 300 connected to both the first electrode tab 124 and the second electrode tab 125 is illustrated.

The lead line 300 may be divided into a first line 300a and a second line 300b. The first line 300a is connected to the first electrode tab 124, so that the first electrode tab 124 is electrically connected to the protective circuit module 200 via the first line 300a. The second line 300b is connected to the second electrode tab 125, so that the second electrode tab 125 is electrically connected to the protective circuit module 200 via the second line 300b.

The first line 300a and the second line 300b are spaced apart from each other as illustrated in FIG. 3A so that they are insulated from each other.

In the current embodiment, the first line 300a and the second line 300b are physically connected by an insulating film 316 to form the single lead line 300. However, the first line 300a and the second line 300b may be physically separated from each other. That is, the first line 300a and the second line 300b may be independent from each other instead of being physically coupled by the insulating film 316.

Each of the first line 300a and the second line 300b includes a first layer 312 and a second layer 314.

The first electrode tab 124 is welded to a first surface of the first layer 312 of the first line 300a to electrically connect the first electrode tab 124 to the protective circuit module 200. Likewise, the second electrode tab 125 is welded to a first surface of the first layer 312 of the second line 300b to electrically connect the second electrode tab 125 to the protective circuit module 200.

The second layer 314 is disposed on a second surface of the first layer 312, that is, on the opposite surface of the first layer 312 as the first surface to which the first electrode tab 124 or the second electrode tab 125 is welded.

Each of the first electrode tab 124 and the second electrode tab 125 may be formed of a material having sufficient welding characteristics. Examples of a material having sufficient welding characteristics include nickel and a nickel based alloy, but are not limited thereto.

Thus, the first layers 312 welded to the first electrode tab 124 and the second electrode tab 125 may be formed of a material having sufficient welding characteristics with the first electrode tab 124 or the second electrode tab 125. Again, examples of a material having sufficient welding characteristics include nickel and a nickel based alloy, but are not limited thereto.

To facilitate welding of the first electrode tab 124 and the second electrode tab 125 to the respective first layers 312by electric resistance welding, the second layers 314 may be formed of a material having improved electrical characteristics relative to the first layers 312.

That is, the second layers 314 may be formed of a material having a high electrical conductivity and a low electrical resistance relative to the first layers 312. In other words, the first layers 312 may be formed of a material having a low electrical conductivity and a high electrical resistance relative to the second layers 314.

The second layers 314 may be formed of a material satisfying the above electrical characteristics. Examples of such a material include copper and a copper based alloy, but are not limited thereto.

The thickness of the first layers 312 may be identical to the thickness of the second layers 314.

Each of the second layers 314 may have a plate shape and be in close contact with the second surface of the respective first layer 312. The insulating film 316 may be disposed over each of the second layers 314 to facilitate close contact with the second surface of the respective first layer 312, and will be described in more detail later in the specification. Each of the second layers 314 has a tetragonal shape in the embodiment shown in FIGS. 3A and 3B. However, in other embodiments of the present invention, each of the second layers 314 may have any shape such as a circular or polygonal shape.

Each of the second layers 314 may be disposed in coating form on the second surface of the respective first layer 312 by any suitable coating method. Examples of suitable coating methods include, but are not limited to, a dry coating method such as vacuum sputtering and a wet coating method such as a solution method.

Each of the second layers 314 may be disposed in plating form on the second surface of the respective first layer 312 by any suitable plating method.

Each of the first layers 312 and each of the second layers 314 may be provided in clad form. That is, each of the second layers 314 is disposed on the second surface of the respective first layer 312, then strongly compressed with a force such as pressure to integrally form the second layer 314 with the first layer 312. This clad form method is different from an alloy form method in which the first layer 312 and the second layer 314 are melted and mixed. In clad form, the first layer 312 is strongly bonded to the second layer 314, but both maintain separate material compositions.

In one embodiment, the lead line 300 includes the insulating film 316 that covers each of the first layers 312 and each of the second layers 314 of the first line 300a and the second line 300b. In one embodiment, the insulating film 316 also physically connects the first line 300a to the second line 300b.

Instead of covering the entire surfaces of each of the first layers 312 and each of the second layers 314, the insulating film 316 covers the surfaces of each of the first layers 312 and second layers 314 except for certain or predetermined regions of the first surfaces of the first layers 312. That is, the insulating film 316 does not cover certain or predetermined regions of the surface of the first layer 312 to which the first electrode tab 124 is welded and certain or predetermined regions of the surface of the first layer 312 to which the second electrode tab 125 is welded. In this manner, the lead line 300 is insulated from the outside, but each of the first layers 312 may be electrically connected, for example by welding, to the first electrode tab 124 or the second electrode tab 125.

The certain or predetermined regions of each of the first layers 312 that the insulating film 316 does not cover are referred to as welding regions 320. The remaining region of the insulating film 316 excluding the welding regions 320 are referred to as lead regions 330.

Each of the welding regions 320 may have an area to facilitate the welding of the first electrode tab 124 or the second electrode tab 125.

While each of the first layers 312 covers all of the respective welding region 320 and much of the respective lead region 330 as illustrated in FIG. 3A, each of the second layers 314 covers just the respective welding region 320 and possibly a relatively small portion of the respective lead region 330.

That is, in one embodiment, the area and size of each of the second layers 314 are identical to those of the respective welding region 320. Alternatively, the area and size of each of the second layers 314 may be larger than those of the corresponding welding region 320 to ensure complete coverage of the welding region 320. In an embodiment shown in FIGS. 3A and 3B, each of the second layers 314 has an area larger than the corresponding welding region 320 to ensure complete coverage of the welding region 320.

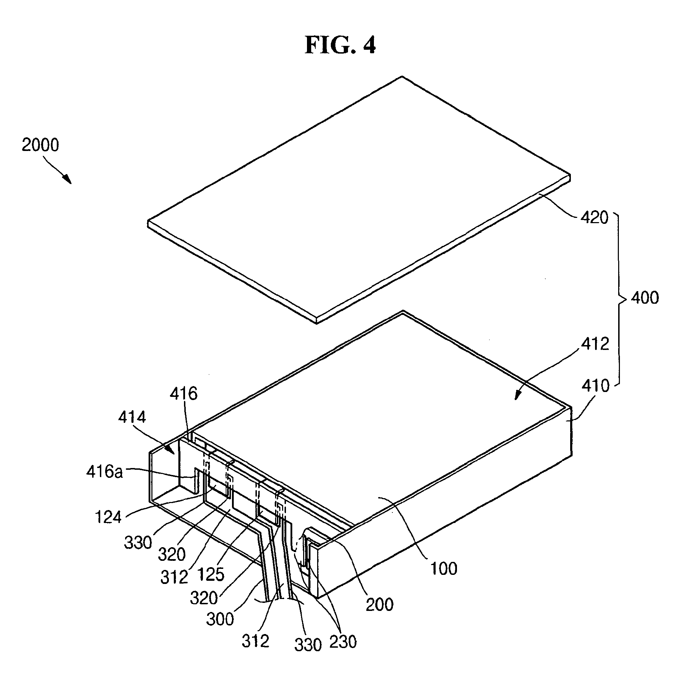

FIG. 4 is a perspective view illustrating a secondary battery according to another embodiment.

Referring to FIG. 4, a secondary battery 2000 has a structure according to one embodiment in which the secondary battery 1000 described with reference to FIGS. 1 through 3B is installed in an outer case 400.

The outer case 400 includes a lower case 410 and an upper case 420 covering the lower case 410. The lower case 410 includes a bare cell receiving part 412 and a protective circuit module receiving part 414.

The bare cell receiving part 412 is separated from the protective circuit module receiving part 414 by a receiving part partition wall 416.

Thus, an embodiment of the secondary battery 2000 includes the bare cell 100 described with reference to FIG. 2 and the protective circuit module 200 described with reference to FIG. 1. In addition, the bare cell 100 is stored in the bare cell receiving part 412, and the protective circuit module 200 is stored in the protective circuit module receiving part 414.

The bare cell 100 is connected to the protective circuit module 200 through the lead line 300 described with reference to FIGS. 3A and 3B.

The lead line 300 connects the bare cell 100 to the protective circuit module 200 through a welding opening 416a provided in the receiving part partition wall 416. The welding opening 416a facilitates an operation in which both the first electrode tab 124 and the second electrode tab 125 of the bare cell 100 are in contact with the welding regions 320 of the lead line 300 and are welded, for example by an electric resistance welding method.

That is, the welding opening 416a facilitates the welding of the lead line 300 to both the first electrode tab 124 and the second electrode tab 125 of the bare cell 100 while the bare cell 100 is stored in the bare cell receiving part 412 and the second end of the lead line 300 is connected to the protective circuit module 200.

According to embodiments and in view of the foregoing, welding characteristics of the lead line welded to the electrode tabs are improved.

While the present invention has been described in connection with certain exemplary embodiments, its is to be understood that the invention is not limited to the disclosed embodiments, but, on the contrary, is intended to cover various modifications and equivalent arrangements included within the scope of the appended claims.

## Claims

1. A secondary battery comprising:
a bare cell (100) comprising an exposed electrode tab (124, 125); and
a lead line (300) welded to the electrode tab (124, 125) and configured to electrically connect the bare cell to a device (200) electrically connected to the lead line (300),
wherein
the lead line (300) comprises a welding region (320) and a lead region (330) excluding the welding region (320),
the lead line (300) is welded to the electrode tab (124, 125) In the welding region (320),
the welding region (320) comprises a first layer (312) and a second layer (314), the first layer (312) being welded to the electrode tab (124, 125) and
the second layer (314) has a higher electrical conductivity than that of the first layer (312),
**characterized In that** the lead line (300) comprises an insulating film (316) formed thereon and configured to expose some region of the first layer for dividing the lead line (300) into the welding region (320) which is not covered with the insulating film and the lead region (330) which is covered with insulating film.

2. The secondary battery as claimed in claim 1, wherein the lead line Is electric resistance welded to the electrode tab.

3. The secondary battery as claimed in claim 1 or 2, wherein the electrode tab is formed of nickel or a nickel based alloy, the first layer is formed of nickel or a nickel based alloy and the second layer is formed of copper or a copper based alloy.

4. The secondary battery as claimed in any one of claims 1 to 3, wherein the first layer has a thickness substantially identical to that of the second layer.

5. The secondary battery as claimed in any one of claims 1 to 4, wherein the second layer has a plate shape and is in contact with a surface of the first layer.

6. The secondary battery as claimed in any one of claims 1 to 5, wherein the second layer comprises a coating on a surface of the first layer.

7. The secondary battery as claimed in any one of claims 1 to 5, wherein the second layer comprises a plated layer on a surface of the first layer.

8. The secondary battery as claimed in any one of claims 1 to 5 and 7, wherein the first and second layers are provided in a clad form.

9. The secondary battery as claimed in any one of claims 1 to 8, wherein the second layer has a larger area than that of the welding region.

## Patentansprüche

1. Sekundärbatterie mit:
einer freiliegenden Zelle (100), die eine ausgesetzte Elektroden-Kontaktfahne (124, 125) aufweist, und
einer Anschlussleitung (300), die an die Elektroden-Kontaktfahne (124, 125) angelötet und eingerichtet ist, die freiliegende Zelle an ein Gerät (200) anzuschließen, das elektrisch mit der Anschlussleitung (300) verbunden ist,
wobei
die Anschlussleitung (300) einen Anlötbereich (320) und einen Leitungsbereich (330) aufweist, der den Anlötbereich (320) ausschließt,
die Anschlussleitung (300) an die Elektroden-Kontaktfahne (124, 125) im Anlötbereich (320) angelötet ist,
der Anlötbereich (320) eine erste Schicht (312) und eine zweite Schicht (314) aufweist, wobei die erste Schicht (312) an die Elektroden-Kontaktfahne (124, 125) angelötet ist, und
die zweite Schicht (314) eine höhere elektrische Leitfähigkeit als diejenige der ersten Schicht (312) aufweist,
**dadurch gekennzeichnet, dass** die Anschlussleitung (300) einen isolierenden Film (316) aufweist, der darauf ausgebildet und eingerichtet ist, einen gewissen Bereich der ersten Schicht auszusetzen, um die Anschlussleitung (300) zu unterteilen in den Anlötbereich (320), der nicht mit dem isolierenden Film bedeckt ist, und den Leitungsbereich (330), der mit dem isolierenden Film bedeckt ist.

2. Sekundärbatterie nach Anspruch 1, wobei die Anschlussleitung durch elektrische Widerstand an die Elektroden-Kontaktfahne angelötet ist.

3. Sekundärbatterie nach Anspruch 1 oder 2, wobei die Elektroden-Kontaktfahne aus Nickel oder einer Nickel-Basis-Legierung ausgebildet ist, die erste Schicht aus Nickel oder einer Nickel-Basis-Legierung ausgebildet ist und die zweite Schicht aus Kupfer oder einer Kupfer-Basis-Legierung ausgebildet ist.

4. Sekundärbatterie nach einem der Ansprüche 1 bis 3, wobei die erste Schicht eine Dicke aufweist, die im Wesentlichen gleich derjenigen der zweiten Schicht ist.

5. Sekundärbatterie nach einem der Ansprüche 1 bis 4, wobei die zweite Schicht eine Plattengestalt aufweist und in Kontakt mit einer Fläche der ersten Schicht ist.

6. Sekundärbatterie nach einem der Ansprüche 1 bis 5, wobei die zweite Schicht einen Belag auf einer Fläche der ersten Schicht aufweist.

7. Sekundärbatterie nach einem der Ansprüche 1 bis 5, wobei die zweite Schicht eine Plattierungsschicht auf einer Fläche der ersten Schicht aufweist.

8. Sekundärbatterie nach einem der Ansprüche 1 bis 5 und 7, wobei die erste und zweite Schicht in einer aufgedrückte Form bereitgestellt sind.

9. Sekundärbatterie nach einem der Ansprüche 1 bis 8, wobei die zweite Schicht eine größere Fläche aufweist als diejenige des Anlötbereichs.

## Revendications

1. Batterie secondaire comprenant :
un élément nu (100) comprenant une patte d'électrode (124, 125) exposée ; et
une ligne de connexion (300) soudée à la patte d'électrode (124, 125) et configurée pour connecter électriquement l'élément nu à un dispositif (200) connecté électriquement à la ligne de connexion (300),
dans laquelle
la ligne de connexion (300) comprend une région de soudage (320) et une région conductrice (330) ne comprenant pas la région de soudage (320),
la ligne de connexion (300) est soudée à la patte d'électrode (124, 125) dans la région de soudage (320),
la région de soudage (320) comprend une première couche (312) et une deuxième couche (314), la première couche (312) étant soudée à la patte d'électrode (124, 125), et
la deuxième couche (314) a une conductivité électrique plus grande que celle de la première couche (312),
**caractérisée en ce que** la ligne de connexion (300) comprend un film isolant (316) formé sur celle-ci et configuré pour exposer une certaine région de la première couche pour diviser la ligne de connexion (300) en la région de soudage (320) qui n'est pas recouverte par le film isolant et la région conductrice (330) qui est recouverte par le film isolant.

2. Batterie secondaire selon la revendication 1, dans laquelle la ligne de connexion est soudée par résistance électrique à la patte d'électrode.

3. Batterie secondaire selon la revendication 1 ou 2, dans laquelle la patte d'électrode est constituée de nickel ou d'un alliage à base de nickel, la première couche est constituée de nickel ou d'un alliage à base de nickel et la deuxième couche est constituée de cuivre ou d'un alliage à base de cuivre.

4. Batterie secondaire selon l'une quelconque des revendications 1 à 3, dans laquelle la première couche a une épaisseur sensiblement identique à celle de la deuxième couche.

5. Batterie secondaire selon l'une quelconque des revendications 1 à 4, dans laquelle la deuxième couche a la forme d'une plaque et est en contact avec une surface de la première couche.

6. Batterie secondaire selon l'une quelconque des revendications 1 à 5, dans laquelle la deuxième couche comprend un revêtement sur une surface de la première couche.

7. Batterie secondaire selon l'une quelconque des revendications 1 à 5, dans laquelle la deuxième couche comprend une couche de métallisation sur une surface de la première couche.

8. Batterie secondaire selon l'une quelconque des revendications 1 à 5 et 7, dans laquelle les première et deuxième couches sont prévues sous une forme plaquée l'une sur l'autre.

9. Batterie secondaire selon l'une quelconque des revendications 1 à 8, dans laquelle la deuxième couche a une aire plus grande que celle de la région de soudage.
